# EUROPÄISCHE PATENTSCHRIFT

(11) **EP 2 931 476 B1**
(45) Veröffentlichungstag und Bekanntmachung des Hinweises auf die Patenterteilung: **01.02.2017**
(21) Anmeldenummer: 13811830.2
(22) Anmeldetag: 10.12.2013
(51) Int. Cl.: B25C 1/08, B25C 1/04

(54) **EINTREIBGERÄT MIT MAGNETISCHER KOLBENHALTERUNG**
FASTENING TOOL WITH MAGNETIC PISTON HOLDER
APPAREIL D'ENFONCEMENT COMPRENANT UN DISPOSITIF MAGNÉTIQUE DE RETENUE DU PISTON

(30) Priorität: 13.12.2012 DE 102012223025
(43) Veröffentlichungstag der Anmeldung: 21.10.2015
(73) Patentinhaber: Hilti Aktiengesellschaft, 9494 Schaan (LI)
(72) Erfinder: BRALLA, Dario, CH-9470 Buchs/SG (CH); RAGGL, Klaus, CH-8004 Zürich (CH); BINDER, Albert, CH-9470 Buchs (CH); KUNTNER, Jochen, A-6850 Dornbirn (AT)
(74) Vertreter: Hilti Aktiengesellschaft Corporate Intellectual Property
(86) Internationale Anmeldenummer: PCT/EP2013/076040
(87) Internationale Veröffentlichungsnummer: WO 2014/090780

(56) Entgegenhaltungen:
- DE-A1- 4 032 204
- DE-A1- 10 254 965

## Beschreibung

Die Erfindung betrifft ein Eintreibgerät nach dem Oberbegriff des Anspruchs 1.

DE 102 53 670 A1 beschreibt ein mit Brenngas betriebenes Eintreibgerät, bei dem ein Eintreibkolben mittels eines Magneten in einer Ausgangsposition gehalten wird. Hierdurch wird eine Kolbenbewegung erst begonnen, wenn der Brenngasdruck die Haltekraft des Magneten übersteigt.

DE-A-102 54 965 beschreibt ein Eintreibgerät nach dem Oberbegriff des Anspruchs 1.

Es ist die Aufgabe der Erfindung, ein Eintreibgerät anzugeben, bei dem ein magnetisch gehaltener Kolben eine hohe Haltekraft erfährt.

Diese Aufgabe wird für eine eingangs genannte Eintreibvorrichtung erfindungsgemäß mit den kennzeichnenden Merkmalen des Anspruchs 1 gelöst. Durch die Ausbildung zweier magnetisch leitender Anschläge kann auf einfache Weise eine besonders starke Haltekraft bezogen auf eine Masse des Halteglieds realisiert werden. Besonders bevorzugt durchlaufen dabei möglichst viele der magnetischen Feldlinien des Erregermagneten eine geschlossene Kurve durch die beiden Anschläge und das anliegende Gegenstück.

Die Bauart des Eintreibgerätes ist bezüglich der auf das Kolbenglied wirkenden Antriebskraft beliebig. Die Erfindung betrifft im Wesentlichen die magnetische Halterung des Kolbengliedes und umfasst allgemein sämtliche Bauformen von Eintriebgeräten mit einem beschleunigten Kolbenglied. Bevorzugt handelt es sich um ein mit Brenngas betriebenes Gerät, bei dem die Antriebskraft durch den Druck des in einer Brennkammer gezündeten Brenngases erzeugt wird. Dabei wird das Beschleunigungsverhalten des Kolbens verbessert, wenn er erst nach Überschreitung einer durch das Halteglied ausgeübten, möglichst hohen Haltekraft freigegeben wird. Eine weitere bevorzugte Ausführungsform des Eintreibgerätes kann als mit Druckluft betriebenes Gerät vorliegen.

Unter einem Befestigungselement im Sinne der Erfindung wird dabei jeder eintreibbare Nagel, Bolzen oder auch eine Schraube verstanden.

Unter einem magnetisch leitenden Material wird im Sinne der Erfindung jedes Material mit einer hohen Permeabilitätszahl µ>>1, bevorzugt µ>4, verstanden. Insbesondere werden unter einem magnetischen Leiter ferromagnetische Stoffe verstanden.

Bevorzugt bestehen zumindest die Anschläge und/oder das Gegenstück als magnetisch leitende Strukturen zugleich aus einem schlagzähen Material, zum Beispiel Eisen oder einer Eisenlegierung, so dass ein Anliegen oder Anschlagen des Kolbens in der gehaltenen Position keine mechanische Zerstörung oder Degradation dieser Strukturen bewirkt.

Unter dem Erregermagnet wird im Sinne der Erfindung eine Struktur verstanden, durch die die magnetische Haltekraft zumindest ganz oder überwiegend bereit gestellt wird. Es handelt sich dabei besonders bevorzugt um einen Permanentmagneten von hoher magnetischer Felddichte. Alternativ oder auch zusätzlich kann ein Elektromagnet als Erregermagnet vorgesehen sein. Bei Ausbildung des Erregermagneten als Permanentmagnet sind insbesondere in Verbindung mit hochwertigen, modernen Magnetmaterialien sehr hohe Haltekräfte bei kleinem Bauraum und Gewicht des Haltegliedes ermöglicht. Ein Elektromagnet hat den Vorteil, dass die Haltekraft je nach Bedarf abstellbar oder veränderbar ist.

Besonders bevorzugt liegt das Gegenstück nicht unmittelbar an dem Erregermagneten an, um mechanische Einwirkungen auf den Erregermagneten zu verhindern. Bevorzugt erfolgt die Anlage lediglich an den magnetisch leitenden Anschlägen, wobei je nach Detailgestaltung eine weitere Anlage an elastischen Dämpfungsmitteln vorgesehen sein kann. Zweckmäßig verbleibt zwischen dem Erregermagneten und dem Gegenstück nur ein kleiner Abstand, über den ebenfalls Haltekräfte übertragen werden bzw. magnetische Feldlinien verlaufen.

Das Gegenstück ist bevorzugt, aber nicht notwendig als separates Bauelement des Kolbengliedes ausgebildet. Insbesondere kann es sich um einen ferromagnetischen Kreisring handeln, der an einem Kolben aus einem anderen Material, zum Beispiel einem Leichtmetall, festgelegt ist. Alternativ hierzu kann aber auch der gesamte Kolben aus einem ferromagnetischen Material bestehen.

Zur Klarstellung wird angemerkt, dass die magnetisch leitenden Anschläge und andere magnetisch leitende Strukturen im engeren Sinne ebenso wie der Erregermagnet aus ferromagnetischem Material bestehen und je nach Material eine nicht vermeidbare, permanente Magnetisierung aufweisen können. Allerdings beträgt die Magnetisierung des Erregermagneten im Sinne der Erfindung ein Vielfaches, insbesondere mehr als 10-faches, einer Magnetisierung der magnetisch leitenden Strukturen. Demzufolge wird die Haltekraft im Sinne der Erfindung zum ganz überwiegenden Teil durch die vom Erregermagneten ausgehenden Feldlinien erzeugt.

Bei einem allgemein bevorzugten Ausführungsbeispiel der Erfindung ist es vorgesehen, dass der Erregermagnet zumindest abschnittsweise kreisringförmig um eine zentrale Achse des Kolbenglieds angeordnet ist. Dabei kann der Erregermagnet je nach Detailgestaltung als geschlossener Kreisring oder auch als mehrere in Umfangsrichtung nacheinander angeordnete Segmente ausgebildet sein.

In bevorzugter Weiterbildung bilden dabei der erste Anschlag und der zweite Anschlag zumindest abschnittsweise einen zu dem Erregermagnet jeweils konzentrischen Kreisring aus, wobei einer der Anschläge einen kleineren Radius und der jeweils andere Anschlag einen größeren Radius als der Erregermagnet aufweist. Eine solche Anordnung erlaubt eine optimale Ausübung einer großen Haltekraft in einem relativ schmalen Randbereich des Kolbenglieds. Ein schmaler Randbereich ist unter Umständen von Vorteil, weil dann die effektive Fläche des Kolbens, auf die das Gas wirkt, gross ist.

Bei einer ersten bevorzugten Ausführungsform ist es vorgesehen, dass die Anschläge berührend an den Erregermagneten angrenzen, wobei ein überwiegender Teil von magnetischen Feldlinien des Erregermagneten in radialer Richtung in die Anschläge eintritt. Eine solche Anordnung ist besonders kleinbauend und Gewicht sparend, hat aber relativ hohe Anforderungen an die Fertigungsgenauigkeit der Anschläge und des Erregermagneten.

Bei einer weiteren, hierzu alternativen Ausführungsform der Erfindung ist zwischen den Anschlägen und dem Erregermagneten ein definierter Spalt vorgesehen, wobei ein magnetisch leitendes Koppelglied die Anschläge und den Erregermagneten auf einer dem Kolben abgewandten Seite miteinander verbindet. Dies ermöglicht eine einfache und kostengünstige Massenfertigung des Halteglieds bei zugleich besonders hohen Haltekräften. Der Spalt ist dabei insbesondere durch eine zurückversetzte Anordnung des Erregermagneten gegenüber den Anschlägen verwirklicht. Alternativ oder zusätzlich weist das Kolbenglied eine Oberflächenkontur auf, welche zwischen sich und dem Erregermagneten einen Spalt gewährleistet.

Bei einer allgemein bevorzugten Weiterbildung der Erfindung ist es vorgesehen, dass der Erregermagnet auf einer dem Kolben zugewandten Seite durch eine magnetisch leitende Folie überdeckt ist. Besonders bevorzugt verbindet die Folie dabei die beiden Anschläge magnetisch leitend. Eine Dicke der Folie ist bevorzugt, aber nicht notwendig, kleiner als 0,5 mm. Durch eine solche Folie kann vermieden werden, dass die magnetische Flussdichte in dem Erregermagneten insbesondere bei hohen Temperaturen kritsche Werte annimmt, die zu einer Entmagnetisierung des Erregermagneten beitragen und dessen Lebensdauer herabsetzen. Hierdurch kann insbesondere auch auf kostengünstigere Materialien bei der Wahl des Erregermagneten zurückgegriffen werden, die eine höhere Temperaturempfindlichkeit aufweisen.

Die erfindungsgemäße Ausbildung eines magnetischen Haltegliedes ermöglicht besonders große Haltekräfte bei gegebener Baugröße und Gewicht des Haltegliedes. Zur Verbesserung der Kolbenbeschleunigung ist es daher bevorzugt vorgesehen, dass eine Haltekraft F des Halteglieds bezogen auf einen Durchmesser d des Kolbens wenigstens F/d = 25 N/cm beträgt.

Weitere Merkmale und Vorteile der Erfindung ergeben sich aus den Ausführungsbeispielen sowie aus den abhängigen Ansprüchen. Nachfolgend werden mehrere bevorzugte Ausführungsbeispiele der Erfindung beschrieben und anhand der anliegenden Zeichnungen näher erläutert.
- Fig. 1: zeigt schematische Schnittansicht eines erfindungsgemäßen Eintreibgerätes gemäß einer ersten Ausführungsform.
- Fig. 2: zeigt eine Detaildarstellung eines magnetischen Haltegliedes des Eintreibgerätes aus Fig. 1.
- Fig. 3: zeigt eine Detaildarstellung eines magnetischen Haltegliedes gemäß einer zweiten erfindungsgemäßen Ausführungsform.
- Fig. 4: zeigt einen berechneten Feldlinienverlauf des magnetischen Halteglieds aus Fig. 2.
- Fig. 5: zeigt eine berechnete Haltekraft des Haltegliedes aus Fig. 2 in Abhängigkeit zweier geometrischer Parameter.
- Fig. 6: zeigt einen berechneten Feldlinienverlauf des magnetischen Halteglieds aus Fig. 3.
- Fig. 7: zeigt einen berechneten Feldlinienverlauf eines magnetischen Halteglieds einer dritten erfindungsgemäßen Ausführungsform mit einer magnetisch leitenden Folie.
- Fig. 8: zeigt Verläufe einer magnetischen Feldstärke des Ausführungsbeispiels aus Fig. 7 in Abhängigkeit von einer Dicke der Folie.
- Fig. 9: zeigt links das Magnetisierungsverhalten eines Permanentmagneten und rechts den Verlauf einer Haltekraft sowie einer damit erzielbaren minimalen Flussdichte in Abhängigkeit von einer Dicke der Folie.

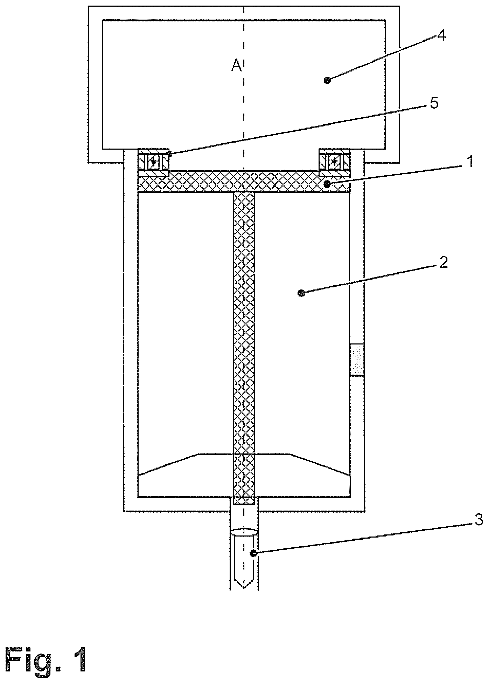

Das in Fig. 1 gezeigte Eintreibgerät umfasst ein Kolbenglied 1, das in einem Zylinder 2 geführt und entlang einer Achse A antreibbar bewegbar ist. Ein Eintreibstößel 1a des Kolbenglieds 1 schlägt in Folge der Kolbenbewegung gegen ein Befestigungselement 3, vorliegend in Form eines Nagels, so dass das Befestigungselement 3 in ein Werkstück (nicht dargestellt) eingetrieben wird. Die gezeigten Bauteile sind auf bekannte Weise in einem handgeführten Gehäuse (nicht dargestellt) angeordnet, so dass das Eintreibgerät als tragbares, von einer Bedienperson mobil einsetzbares Gerät ausgebildet ist.

Der Antrieb des Kolbens 1 erfolgt vorliegend durch die Expansion eines gezündeten Luft-Brenngas-Gemisches in einer oberhalb des Zylinders 2 angeordneten Brennkammer 4. Dabei ist der Kolben in einer in Fig. 1 dargestellten Ausgangsposition mittels eines magnetischen Halteglieds 5 festgehalten. Gemäss nicht gezeigter Ausführungsformen erfolgt der Antrieb des Kolbens durch Druckluft oder die Expansion eines gezündeten Brennpulvers einer Pulverkartusche. Nach einem Zünden des Brenngases steigt der Druck in der Brennkammer bei konstantem Volumen an, bis die auf den Kolben ausgeübte Druckkraft die magnetische Haltekraft F des Halteglieds 5 übersteigt. Die anfängliche Beschleunigung des Kolbens steigt entsprechend mit der Größe der zuvor bestehenden Haltekraft an.

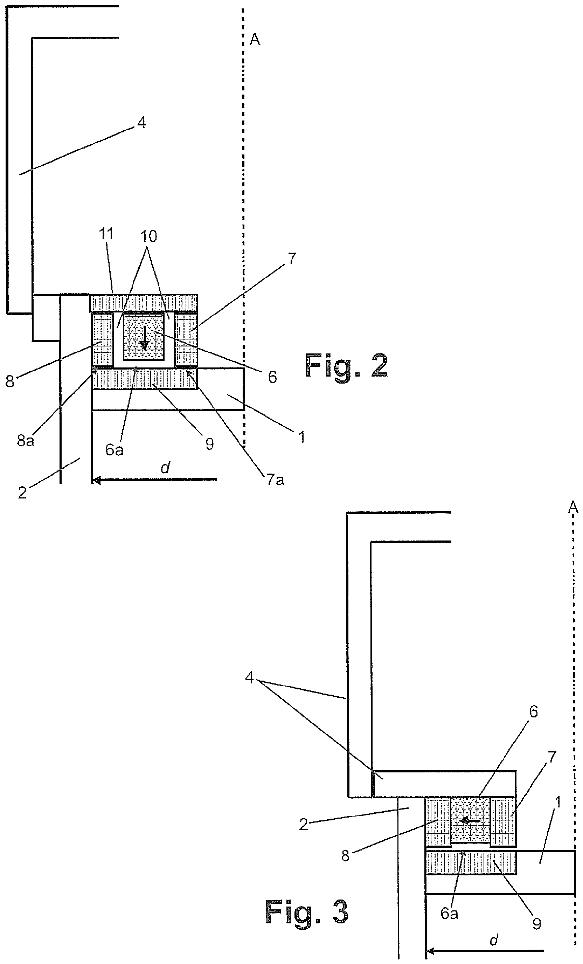

Das magnetische Halteglied 1 ist in Fig. 2 detailliert dargestellt. Es umfasst einen ringförmigen, zu der Achse A konzentrisch angeordneten Permanentmagneten 6 als Erregermagneten, dessen Magnetisierung parallel zu der Achse A orientiert ist. Ein erster Anschlag 7 und ein zweiter Anschlag 8 sind jeweils als Ringe ausgeformt, wobei der erste Anschlag 7 einen kleineren Radius als der Erregermagnet 6 und der zweite Anschlag 8 einen größeren Radius als der Erregermagnet 6 aufweist. Der erste Anschlag 7 ist dabei radial innerhalb des Erregermagneten 6 und axial mit diesem überlappend angeordnet. Der Erregermagnet 6 ist wiederum radial innerhalb des zweiten Anschlags 8 und axial mit diesem überlappend angeordnet. Der erste Anschlag 7 ist mit dem zweiten Anschlag 8 ebenfalls axial überlappend, insbesondere auf gleicher axialer Höhe angeordnet.

Zwischen den Anschlägen 7, 8 und dem Erregermagneten verbleiben jeweils ringförmige Luftspalte 10, so dass der Erregermagnet mit den Anschlägen 7, 8 in radialer Richtung nicht berührend verbunden ist.

Die Anschläge 7, 8 haben kreisringförmige Frontseiten 7a, 8a, an denen ein Gegenstück 9 des Kolbenglieds 1 in der Ausgangsposition anliegt. Dabei werden die Anschläge 7, 8 durch das Gegenstück 9 magnetisch verbunden, so dass eine hohe magnetische Haltekraft das Gegenstück 9 gegen die Anschläge 7, 8 zieht.

Zwischen dem Erregermagneten 6 und dem Gegenstück 9 verbleibt ein Luftspalt 6a, der bevorzugt eine Breite kleiner als 0,4 mm, typisch eine Breite von etwa 0,1 mm aufweist. Hierdurch berührt das Gegenstück den Erregermagneten 6 nicht unmittelbar, zugleich ist aber aufgrund der kleinen Breite des Luftspaltes 6a ein ausreichender Durchtritt von Feldlinien gewährleistet. Bevorzugt ist der Luftspalt 6a so klein wie möglich.

Auf einer dem Kolbenglied 1 abgewandten Seite sind die Anschläge 7, 8 über ein Koppelglied 11 miteinander verbunden, wobei der Erregermagnet berührend an dem Koppelglied 11 angebracht ist. Die Verbindung von Erregermagnet 6 und Koppelglied 11 kann durch Verklebung, formschlüssige Mittel oder auf andere Weise erfolgen.

Die Anschläge 7, 8, das Koppelglied 11 und das Gegenstück 9 bestehen jeweils aus magnetisch leitendem Material im Sinne der Erfindung wie z.B. eine Eisenlegierung oder ein gesintertes Ferrit.

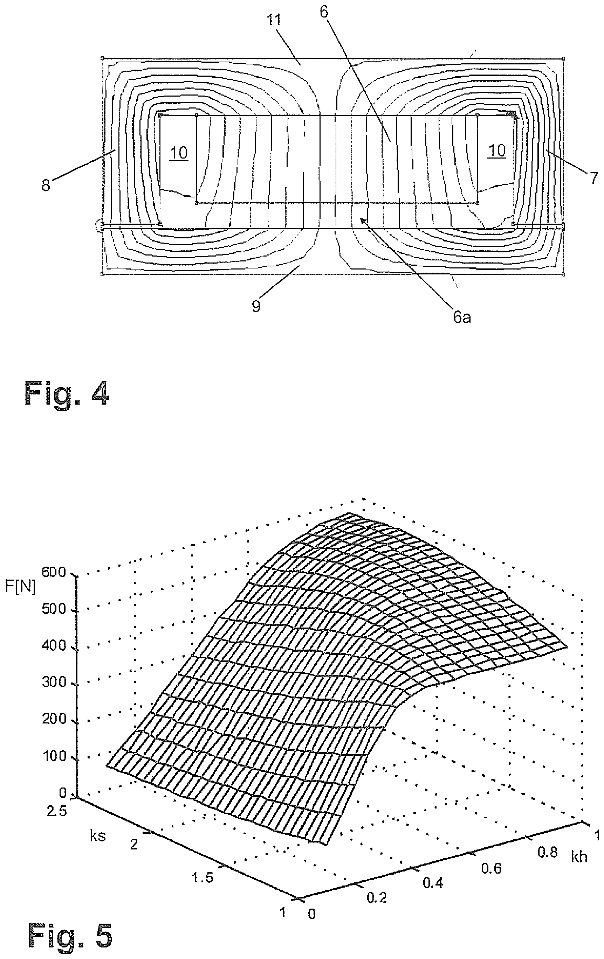

Die Berechnung bzw. Simulation der magnetischen Feldlinien in Fig. 4 zeigt, dass die Feldlinien im gehalten Zustand des Kolbenglieds 1 jeweils annähernd ringförmig geschlossen sind, wodurch sich eine hohe Haltekraft ergibt.

Das Kolbenglied 1 hat im vorliegenden Beispiel einen Durchmesser d von 7 cm. Die in Fig. 5 gezeigte Berechnung der Haltekraft F zeigt, dass typische Kräfte im Bereich oberhalb von 300 N und bis zu rund 600 N liegen können. Dies entspricht bezogen auf den Kolbendurchmesser einer Kraft von rund 43 N/cm bis zu etwa 85 N/cm.

Bei der Berechnung gemäß Fig. 5 wurden geometrische Parameter des Haltegliedes variiert. Der Parameter ks ist dabei als Verhältnis Am/Af definiert, wobei Am die stirnseitige Oberfläche des Erregermagneten 6 ist und Af die Summe der Oberflächen der Frontseiten der Anschläge 7a, 8a. Der Parameter kh ist definiert als das Verhältnis einer in axialer Richtung gemessenen Höhe des Koppelglieds 11 zu einer in axialer Richtung gemessenen Höhe des Gegenstücks 9.

Durch Betrachtung und Optimierung dieser und anderer geometrischer Parameter kann das Gewicht des Haltegliedes optimiert werden. Weitere geometrische Parameter sind zum Beispiel die Breite der bevorzugt, aber nicht zwingend gleich grossen Luftspalte 10, Höhe und Breite des Magneten 6 sowie Höhe und Breite der Anschläge 7, 8.

Fig. 3 zeigt ein zweites, vom ersten Ausführungsbeispiel verschiedenes Beispiel eines erfindungsgemäßen Halteglieds. Dabei liegen die Anschläge 7, 8 in radialer Richtung unmittelbar an dem Erregermagneten (Permanentmagnet) 6 an, so dass keine Luftspalte verbleiben. Der Erregermagnet 6 hat im Unterschied zum ersten Ausführungsbeispiel eine radial gerichtete Magnetisierung, so dass die Feldlinien in radialer Richtung gerade in die Anschläge 7, 8 eintreten.

Im Unterschied zum ersten Ausführungsbeispiel kann wegen des Fehlens der Luftspalte auf ein Koppelglied zwischen den Anschlägen verzichtet werden. Dies ermöglicht eine leichtere Bauform bei vergleichbaren Haltekräften. Die in Fig. 3 gezeigte Verbindung der Anschläge 7, 8 erfolgt über einen magnetisch nicht leitenden Boden der Brennkammer 4 aus einer Aluminiumlegierung.

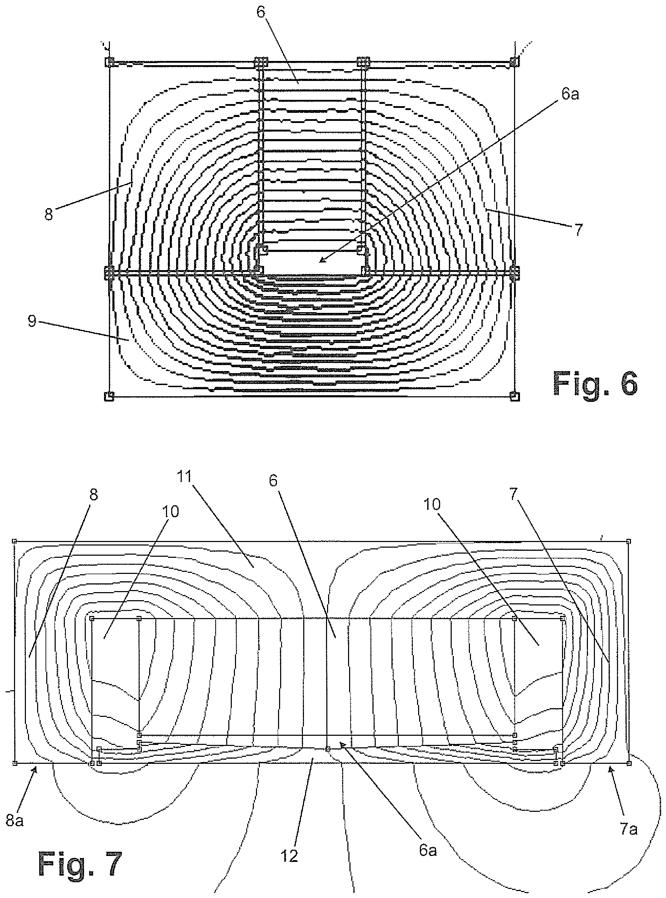

Fig. 6 zeigt eine Berechnung des Verlaufs der magnetischen Feldlinien in dem Halteglied der zweiten Ausführungsform. Es wird deutlich, dass im Unterschied zum ersten Ausführungsbeispiel nur ein Satz von konzentrischen Feldlinien vorliegt, wobei aufgrund der um 90° gedrehten Magnetisierung keine Feldlinien die axial gerichteten Oberflächen des Erregermagneten 6 verlassen. Entsprechend ist die Größe des verbleibenden Spaltes zwischen dem Erregermagneten und dem anliegenden Gegenstück bei diesem Beispiel weitgehend unerheblich.

Fig. 7 zeigt ein weiteres Ausführungsbeispiel der Erfindung mit berechnetem Verlauf der Feldlinien. Dargestellt ist das Halteglied ohne anliegendes Gegenstück.

Das Beispiel aus Fig. 7 ist weitgehend mit dem Beispiel aus Fig. 1 identisch, wobei zusätzlich eine magnetisch leitende Folie 12 unterhalb des Erregermagneten 6 angeordnet ist. Die Folie 12 verbindet vorliegend die Anschläge 7, 8 miteinander, so dass eine hohe Feldliniendichte von den Anschlägen 7, 8 in die Folie eintritt.

Die Folie hat vorliegend eine Dicke bzw. Höhe von etwa 0,1 mm. wie aus Fig. 7 erkennbar ist, kann die Folie 12 über ihre Breite auch eine Strukturierung, zum Beispiel Bereiche unterschiedlicher Dicke, aufweisen, um eine Feinoptimierung des Verlaufs der Feldlinien zu erreichen.

Insgesamt führt die Folie 12 zu einer wenn auch geringen Abschwächung der erzielbaren Haltekraft F. Allerdings kann durch die Folie erreicht werden, dass der Erregermagnet auch bei höheren Temperaturen keine Entmagnetisierung durch wechselnde Positionen des Kolbens erfährt.

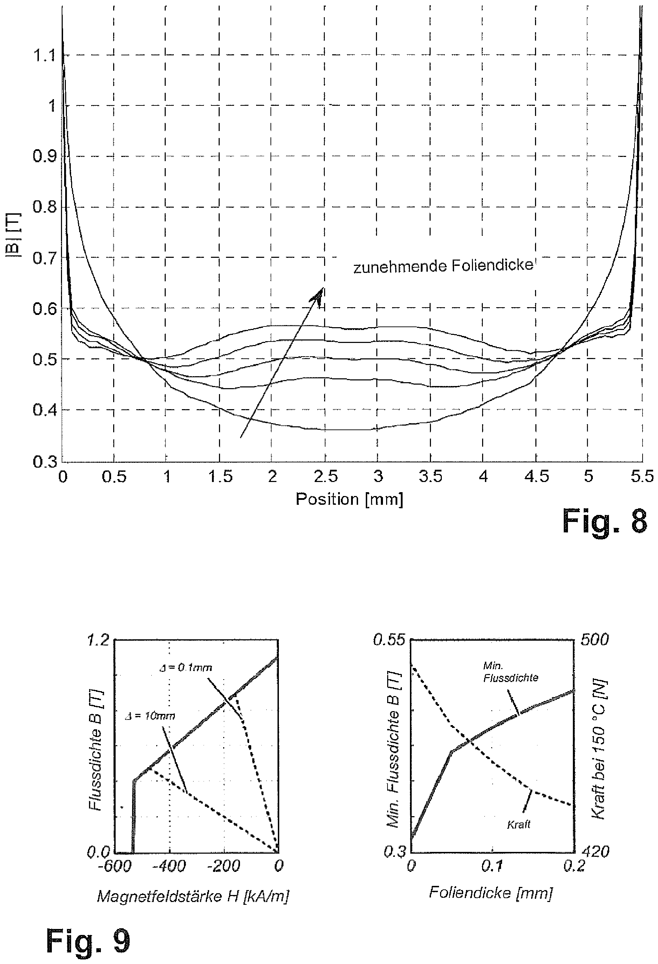

Fig. 8 zeigt den räumlichen Verlauf der magnetischen Flussdichte über die seitliche Erstreckung der in Fig. 7 gezeigten Folie in Abhängigkeit von einer Dicke der Folie. Es wird deutlich, dass durch den Einsatz der Folie eine minimale magnetische Flussdichte ansteigt, wodurch einer Entmagnetisierung des Erregermagneten bei hohen Temperaturen entgegengewirkt wird, was im Folgenden anhand von Fig. 9 ersichtlich wird.

Fig. 9 zeigt zwei Diagramme, die eine mögliche Entmagnetisierung des Erregermagneten betreffen.

Im linken Diagram ist das Magnetisierungsverhalten des Permanentmagneten 6 als durchgezogene Linie bei einer gegebenen Temperatur von 150° C dargestellt. Die untere gestrichelte Linie entspricht einem Kolbenabstand von Delta=10mm, was mit einem vollständig entfernten Kolben gleichzusetzen ist. Die obere gestrichelte Linie entspricht einem Kolbenglied 1 in der Grundposition bei anliegendem Gegenstück (Delta=0,1 mm).

Der Knick bzw. steile Abfall im linken Bereich der durchgezogenen Kurve entspricht Zuständen der magnetischen Flussdichte, bei denen eine zumindest teilweise Entmagnetisierung des Erregermagneten 6 erfolgt, wenn der Kolben seine Position wechselt. Vorliegend werden diese Zustände bei gegebener Temperatur nicht erreicht.

Um dies für den gesamten Bereich von Betriebstemperaturen sicher zu stellen, kann die vorstehend beschriebene Folie 12 verwendet werden. Alternativ könnte auch, soweit möglich, ein entsprechend geeignetes Material des Permanentmagneten gewählt werden, was aber zu sehr hohen Kosten führen kann.

Das rechte Diagramm in Fig. 9 zeigt den Verlauf der Haltekraft F (Force) in Abhängigkeit von der Foliendicke, wobei zudem die dadurch erzielte minimale Flussdichte aufgetragen ist. Es ist erkennbar, dass ein relativ geringer Abfall der Haltekraft mit erheblichen Verbesserungen der tolerierbaren Flussdichte einher geht. In jedem Fall werden für das konkrete Beispiel mit d=7 cm Kolbendurchmesser Haltekräfte von weit mehr als 400 N erzielt.

Die für das linke Diagramm in Fig. 9 gewählte Foliendicke ("foil height") liegt bei ungefähr 0,1 mm, so dass die minimale Flussdicht bei etwa 0,4 Tesla liegt und eine Haltekraft F von etwa 470 N erzielt wird.

## Patentansprüche

1. Eintreibgerät, umfassend
ein insbesondere handgeführtes Gehäuse mit einem darin aufgenommenen,
antreibbar bewegbaren Kolbenglied (1) zur Übertragung von Energie auf ein Befestigungselement (3),
wobei das Kolbenglied (1) in einem Zylinder (2) geführt ist und mittels einer Antriebskraft gegen das Befestigungselement (3) beschleunigt werden kann,
wobei das Kolbenglied (1) mittels einer magnetischen Kraft eines Halteglieds (5) in einer Ausgangsposition gehalten werden kann,
**dadurch gekennzeichnet,**
**dass** das Halteglied (5) einen ersten, magnetisch leitenden Anschlag (7) und einen zweiten, magnetisch leitenden Anschlag (8) aufweist, wobei die magnetischen Anschläge (7, 8) in dem gehaltenen Zustand des Kolbenglieds (1) durch ein an dem Kolbenglied angeordnetes, magnetisch leitendes Gegenstück (9) verbunden sind, und wobei zwischen den magnetisch leitenden Anschlägen (7, 8) ein Erregermagnet (6) angeordnet ist.

2. Eintreibgerät nach Anspruch 1, **dadurch gekennzeichnet, dass** der Erregermagnet (6) als Permanentmagnet ausgebildet ist.

3. Eintreibgerät nach einem der vorhergehenden Ansprüche, **dadurch gekennzeichnet, dass** der Erregermagnet (6) zumindest abschnittsweise kreisringförmig um eine zentrale Achse (A) des Kolbenglieds (1) angeordnet ist.

4. Eintreibgerät nach Anspruch 3, **dadurch gekennzeichnet, dass** der erste Anschlag (7) und der zweite Anschlag (8) zumindest abschnittsweise einen zu dem Erregermagneten (6) konzentrischen Kreisring ausbilden, wobei einer der Anschläge (7) einen kleineren Radius und der jeweils andere Anschlag (8) einen größeren Radius als der Erregermagnet (6) aufweist.

5. Eintreibgerät nach einem der vorhergehenden Ansprüche, **dadurch gekennzeichnet, dass** die Anschläge (7, 8) berührend an den Erregermagnet (6) angrenzen, wobei ein überwiegender Teil von magnetischen Feldlinien des Erregermagneten (6) in radialer Richtung in die Anschläge (7, 8) eintritt.

6. Eintreibgerät nach einem der Ansprüche 1 bis 4, **dadurch gekennzeichnet, dass** zwischen den Anschlägen (7, 8) und dem Erregermagneten (6) ein definierter Spalt (10) vorgesehen ist, wobei ein magnetisch leitendes Koppelglied (11) die Anschläge (7, 8) und den Erregermagneten (6) auf einer dem Kolbenglied (1) abgewandten Seite miteinander verbindet.

7. Eintreibgerät insbesondere nach einem der vorhergehenden Ansprüche, **dadurch gekennzeichnet, dass** der Erregermagnet (6) auf einer dem Kolbenglied (1) zugewandten Seite durch eine magnetisch leitende Folie (12) überdeckt ist.

8. Eintreibgerät nach Anspruch 7, **dadurch gekennzeichnet, dass** die Folie (12) die beiden Anschläge (7, 8) magnetisch leitend verbindet.

9. Eintreibgerät nach Anspruch 7 oder 8, **dadurch gekennzeichnet, dass** eine Dicke der Folie (12) unterhalb des Erregermagneten (6) weniger als 0,5 mm beträgt.

10. Eintreibgerät nach einem der vorhergehenden Ansprüche, **dadurch gekennzeichnet, dass** eine Haltekraft F des Halteglieds (5) bezogen auf einen Durchmesser d des Kolbenglieds (1) wenigstens F/d = 25 N/cm beträgt.

## Claims

1. Driving tool, comprising
a particularly hand-operated housing with a piston element (1) received in the housing, which may be driven and moved for transferring energy to a fastening element (3),
in which the piston element (1) is introduced into a cylinder (2) and may be accelerated against the fastening element (3) by means of a driving force,
in which the piston element (1) may be held in an inital position by means of a magnetic force of a holding element (5),
**characterised in that**
the holding element (5) has a first magnetically conductive stop (7) and a second magnetically conductive stop (8), in which in the held position of the piston element (1) the magnetic stops (7, 8) are connected through a magnetically conductive counterpart (9) arranged on the piston element, and in which an excitation magnet (6) is arranged between the magnetically conductive stops (7, 8).

2. Driving tool according to claim 1, **characterised in that** the excitation magnet (6) is made as a permanent magnet.

3. Driving tool according to one of the previous claims, **characterised in that** the excitation magnet (6) is arranged at least in sections in a circular way around a central axis (A) of the piston element (1).

4. Driving tool according to claim 3, **characterised in that** the first stop (7) and the second stop (8) at least in sections form a circle that is concentric to the excitation magnets (6), in which one of the stops (7) has a smaller radius and the other stop (8) has a larger radius than the excitation magnet (6).

5. Driving tool according to one of the previous claims, **characterised in that** the stops (7, 8) adjoin resting on the excitation magnet (6), in which a predominant part of magnetic field lines of the excitation magnets (6) goes into the stops (7, 8) in an axial direction.

6. Driving tool according to one of claims 1 to 4, **characterised in that** a defined gap (10) is provided between the stops (7, 8) and the excitation magnets (6), in which a magnetically conductive connecting element (11) connects the stops (7, 8) and the excitation magnets (6) to each other on a side of the piston element (1) facing away.

7. Driving tool particularly according to one of the previous claims, **characterised in that** the excitation magnet (6) is covered by a magnetically conductive foil (12) on a side facing towards the piston element (1).

8. Driving tool according to claim 7, **characterised in that** the foil (12) connects both stops (7, 8) in a magnetically conductive way.

9. Driving tool according to claim 7 or 8, **characterised in that** a thickness of the foil (12) underneath the excitation magnets (6) amounts to less than 0.5 mm.

10. Driving tool according to one of the previous claims, **characterised in that** a holding force F of the holding element (5) in relation to a diameter d of the piston element (1) amounts to at least F/d = 25 N/cm

## Revendications

1. Appareil d'enfoncement, comportant :
un boîtier notamment tenu à la main contenant un élément de piston (1) pouvant être déplacé par entraînement pour transférer de l'énergie à un élément de fixation (3),
dans lequel l'élément de piston (1) est guidé dans un cylindre (2) et peut être accéléré contre l'élément de fixation (3) au moyen d'une force d'entraînement,
dans lequel l'élément de piston (1) peut être maintenu dans une position initiale au moyen d'une force magnétique d'un élément de retenue (5),
**caractérisé en ce que** l'élément de retenue (5) comporte une première butée magnétiquement conductrice (7) et une seconde butée magnétiquement conductrice (8), dans lequel les butées magnétiques (7, 8) sont reliées par une pièce complémentaire magnétiquement conductrice (9) agencée sur l'élément de piston (1) dans l'état de maintien de ce dernier, et dans lequel un aimant d'excitation (6) est agencé entre les butées magnétiquement conductrices (7, 8).

2. Appareil d'enfoncement selon la revendication 1, **caractérisé en ce que** l'aimant d'excitation (6) est formé comme un aimant permanent.

3. Appareil d'enfoncement selon l'une des revendications précédentes, **caractérisé en ce que** l'aimant d'excitation (6) est agencé, au moins dans certaines parties, de manière circulaire autour d'un axe central (A) de l'élément de piston (1).

4. Appareil d'enfoncement selon la revendication 3, **caractérisé en ce que** la première butée (7) et la seconde butée (8) forment, au moins dans certaines parties, un anneau circulaire concentrique à l'aimant d'excitation (6), dans lequel l'une des butées (7) a un rayon plus petit que l'aimant d'excitation (6) et l'autre butée respective (8) a un rayon plus grand que l'aimant d'excitation (6).

5. Appareil d'enfoncement selon l'une des revendications précédentes, **caractérisé en ce que** les butées (7, 8) bordent et viennent en contact avec l'aimant d'excitation (6), dans lequel une majeure partie des lignes de champ magnétiques de l'aimant d'excitation (6) pénètrent dans les butées (7, 8) dans une direction radiale.

6. Appareil d'enfoncement selon l'une des revendications 1 à 4, **caractérisé en ce qu'**un espace défini (10) est prévu entre les butées (7, 8) et l'aimant d'excitation (6), dans lequel un élément de couplage magnétiquement conducteur (11) relie les butées (7, 8) et l'aimant d'excitation (6) les uns aux autres sur un côté opposé à l'élément de piston (1).

7. Appareil d'enfoncement notamment selon l'une des revendications précédentes, **caractérisée en ce que** l'aimant d'excitation (6) est recouvert par un film magnétiquement conducteur (12) sur un côté dirigé vers l'élément de piston (1).

8. Appareil d'enfoncement selon la revendication 7, **caractérisé en ce que** le film (12) relie les deux butées (7, 8) de manière magnétiquement conductrice.

9. Appareil d'enfoncement selon la revendication 7 ou 8, **caractérisé en ce qu'**une épaisseur du film (12) sous l'aimant d'excitation (6) est inférieure à 0,5 mm.

10. Appareil d'enfoncement selon l'une des revendications précédentes, **caractérisé en ce qu'**une force de retenue F de l'élément de retenue (5) est au moins de F/d = 25 N/cm par rapport à un diamètre d de l'élément de piston (1).
